# EUROPEAN PATENT SPECIFICATION

(11) **EP 1 956 278 B1**
(45) Date of publication and mention of the grant of the patent: **07.04.2010**
(21) Application number: 08002112.4
(22) Date of filing: 05.02.2008
(51) Int. Cl.: F16L 19/06, F16L 19/12, F16L 19/08

(54) **Coupling**
Anschlussstück
Raccord

(30) Priority: 06.02.2007 NO 20070685
(43) Date of publication of application: 13.08.2008
(73) Proprietor: Raufoss Water & Gas AS, 2381 Raufoss (NO)
(72) Inventor: Monsen, Alf Greve, 2830 Raufoss (NO); Slattsveen, Tore, 2830 Raufoss (NO)
(74) Representative: Christiansen, Bjørn Hemma

(56) References cited:
- WO-A-99/20931
- WO-A-03/010461
- GB-A- 2 200 180
- GB-A- 2 210 123

## Description

### Field of the invention.

The present invention relates to a tube coupling, comprising a coupling housing consisting of a first and a second housing part which can be screwed together axially, each of which having an internal conical surface with, in the position of use, opposite conicity in the two conical surfaces. A coupling member situated in the housing is adapted to, by the screwing together, to be influenced by a conical clamping ring by cooperation with the conical surface in the first housing part, for clamping of a tube inserted in the coupling housing. By the screwing together the coupling member influences a resilient ring which causes sealing between the tube and the second housing part.

### Prior art

Examples of couplings for clamping of tubes are disclosed in WO 99/20931 and WO 03/010461. These the publications show a first housing part having internal threads and an internal conical surface, and a second housing part having external threads adapted to the threads in the first housing parts. A split clamping ring, which during the screwing together of the housing parts is pressed against the conical surface in the first housing part, is compressed against the tube in order to immobilize it. In WO 99/20931 which discloses a coupling according to the preamble of claim 1, the clamping ring is shown as a ring being split in such a manner that the ends thereof may pass each other, i.e. such that the ends overlap each other, when the ring has been sufficiently compressed. A resilient, sleeve shaped sealing ring is situated in a widened bore in the second housing part, and is compressed axially during the screwing together of the housing parts. In WO 99010461 the clamping ring is shown as a ring being split transversely of its circumferential direction. In the uncompressed state of the ring the split has a relatively large dimension in the circumferential direction, whereby there is sufficient space for compressing the ring to a rather large degree until the ends near the split engage each other. A resilient sealing ring is situated innermost in a widened bore in the second housing part, and is compressed by a sleeve, against which the clamping ring is pressed during the screwing together of the housing parts. Thus, the coupling member is able to adapt itself to tubes having different outer diameters.

Moreover, the second housing part is symmetrical about a transversal middle plane, whereby another first housing part can be screwed onto the other end of the second housing part, for immobilizing a second tube. In other words, the coupling may be used for coupling together two tube ends.

EP 0583707 describes a method of producing fingers on a clamping ring, the fingers are to be pressed, when the clamping ring has been inserted in a coupling, against a tube inserted in the coupling.

GB 1214889 describes a tube coupling having two coupling parts to be screwed together, whereby a coupling member situated in the coupling is compressed axially, and a leading edge on the coupling member is compressed radially and bites into a tube inserted in the coupling.

### Summary of the invention.

In the coupling according to the invention one end of the coupling member has axial, flexible fingers separated by splits, whereby the free ends of the fingers may be forced along the conical surface in the second housing part and force the resilient ring along the conical surface and compress it against the tube.

The opposite end of the coupling member is influenced by a conical ring in engagement with the conical surface in the first housing part and causes an axial counter-force against the force exerted by the fingers against the conical surface in the second housing part and the sealing ring. Thereby, the fingers will be bent inwardly by being moved towards the narrowest end of the conical surface, and the free ends of the fingers are able to clamp an inserted tube. This may take place with tubes having diameters within a certain range between a largest diameter which just allows insertion of the tube in the coupling member and a smallest diameter towards which the fingers can be bent.

The conical ring may be a separate ring engaging the coupling member. The ring may also be integral with the coupling member.

The coupling member may be composed of two parts, a first part in the form of a sleeve engaging the conical ring and also acting as a guide relatively to one of the housing parts, and a second part having said splits and fingers in a large portion of its length and being radially spaced from the housing part in which it is situated. The two parts of the coupling member may for instance be interconnected by use of an interference fit. However, the method of interconnection is not critical, since the parts of the coupling member will be pressed axially together when the housing parts are screwed together.

In order to secure that the coupling member is under an axial strain when the housing parts have been screwed together and tightened, the coupling member may comprise slits in at least two rows in the circumferential direction. Each of these slits extend only in a portion of the circumference, and the slits in adjacent rows may be mutually displaced in the circumferential direction, in such a manner that they only extend partly along each other; i.e. in a partly overlapping fashion. Those portions of the coupling member situated between the slits where the slits extend along each other (or overlap each other) form resilient bridges in the circumferential direction of the coupling member, whereby the coupling member may be slightly compressed axially. This means that the coupling member will be in a condition of inner strain upon tightening of the two housing parts, in that the circumferentially extending slits are slightly narrowed in width; i.e. in the axial direction of the coupling member. Two such slits are sufficient, but more than two slits may be used.

As mentioned, the coupling member may be used for tubes having diameters within a certain range. As an example, one particular coupling member may be used for all tubes within the diameter range of 27 to 34 mm. Thus, there is no need of a specific coupling for each tube dimension within a certain range.

The coupling may be used for tubes made of any type of material, incl. plastics, rubber, metal, metal alloys, steel etc..

The different parts of the coupling may be made of different materials, such as various types of metals and metal alloys and various types of plastics and composite materials.

In the following the invention will be explained more detailed by means of examples, shown on the accompanying drawings.

### Brief description of the drawings.

- Fig.1: shows in a perspective view a coupling according to the invention, the housing parts having been partly screwed together.
- Fig. 2: shows an axial, longitudinal section through an embodiment of the coupling, incl. a clamping ring being a separate part; i.e. not being integral with the coupling member.
- Fig. 3: shows an axial, longitudinal section through another embodiment of the coupling, incl. a clamping ring being integral with the coupling member.
- Fig. 4: shows in a perspective view a coupling member for use in a coupling according to the invention.

### Detailed description.

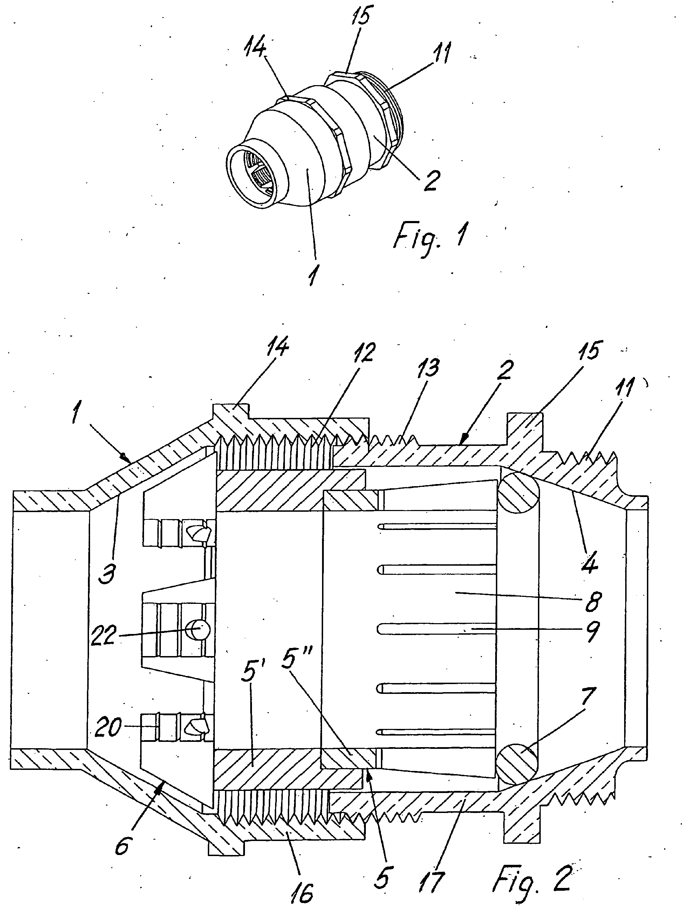

Fig. 1 shows two housing parts, of which the housing part 2 has external threads 11 on one end, in order to be screwed together with any internally threaded member. These threads may, however, be replaced by any other suitable means of connecting the housing part to another member.

In order to permit screwing together of the two housing parts 1 and 2, each of these parts are formed with a portion adapted for entering of a tool, such as the shown portions 14 and 15, being hexagonal portions for use together with a wrench. Such hexagonal portions are best shown in Fig. 1.

Fig. 2 shows an axial, longitudinal section through an embodiment of the coupling. A first housing part 1 has an internal conical surface 3, and comprises internal threads 12 in an annular portion 16. A second housing part 2 has an internal conical surface 4, and comprises external threads 13 on an annular portion 17 which can be screwed into the annular portion 16 of the first housing part 1. Moreover, the housing part 2 is shown as having an externally threaded portion 11, in order to permit screwing the housing part 2 together with any other member having corresponding internal threads.

The housing parts 1 and 2 contain, in the screwed together condition shown in Fig. 2, a coupling member 5, a conical clamping ring 6 and a resilient ring 7, which may be an O-ring. The clamping ring 6 is situated along the conical surface 3, while the resilient ring 7 is situated along the conical surface 4. In Fig. 2 the conical clamping ring 6 is shown in a certain distance from the conical surface 3. This is due to the fact that Fig. 2 shows the coupling in a state before the housing parts 1 and 2 have been completely screwed together.

The coupling member 5 consists, in this embodiment, merely due to ease of manufacture and of no importance to the functioning, of two parts 5' and 5". The coupling member 5 includes a portion having longitudinal splits 9, whereby longitudinal fingers 8 are formed between the splits 9.

Fig. 2 shows the coupling in a first stage of screwing together of the housing parts 1 and 2. The ends of the fingers 8 are in engagement with the ring 7, but have not yet come into engagement with the conical surface 4. In this condition of the coupling a tube (not shown) can be inserted into the coupling from any of the ends thereof. By continued screwing together of the coupling parts 1 and 2 upon insertion of the tube, the ends of the fingers 8 come into engagement with the conical surface 4, and the fingers 8 will flex radially inwardly and come into engagement with the external surface of the tube. Simultaneously, the resilient ring 7 is forced to move along the conical surface 4, towards the narrowest end of the conical surface 4, and comes into engagement with the external surface of the tube in order to cause sealing between the tube and the conical surface 4.

At the opposite end of the coupling the screwing together of the coupling parts 1 and 2 will cause that the clamping ring 6 is compressed by being forced along the conical surface 3 in a direction towards the narrowest end of the conical surface 3.

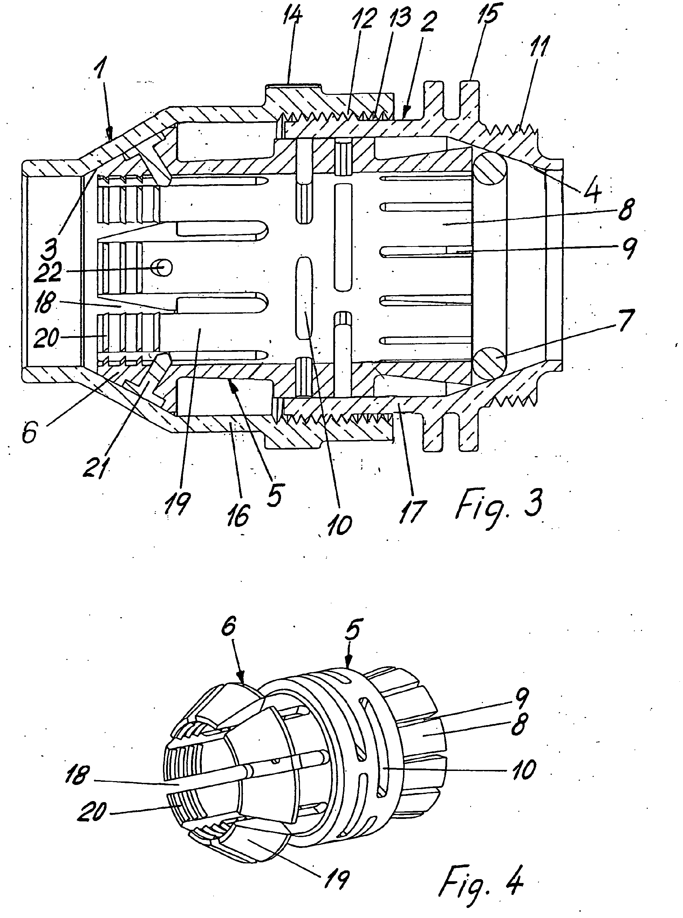

Fig. 3 shows another embodiment, which partly is similar to that of Fig. 2, in that it comprises two housing parts 1 and 2, internal conical surfaces 3 and 4, a coupling member 5, a clamping ring 6, a sealing ring 7, fingers 8 at one end of the coupling member 5, splits 9 between the fingers 8, external threads 11 on one end portion of the housing part 2, internal threads 12 in an annular portion 16 of he housing part 1 and external threads 13 on an annular portion 17 of the housing part 2. The coupling member 5 is also shown as having slits 10 in the circumferential direction. By the screwing together of the housing parts 1 and 2 these slits 10 can be compressed in their width direction; i.e. in the axial direction of the coupling member 5, and the coupling member 5 may be brought into a condition of axial strain.

Reference is also made to Fig. 4, showing an embodiments of the coupling member 5 for use in a coupling according to the invention. The coupling member 5 corresponds to the embodiment which is incorporated in the coupling shown in Fig. 3.

Differently from the embodiment shown in Fig. 2 the clamping ring 6 is, as it best appears from fig. 4, integral with the remainder of the coupling member 5. In the area of the clamping ring 6, and almost to the middle of the coupling member 5, the coupling member 5 has splits 18, whereby also this end of the coupling member 5 has fingers 19 between the splits 18. For improved clamping of an inserted tube (not shown) the fingers 19 have internal ribs 20 in the circumferential direction of the coupling member 5. These ribs 20 may have sharp edges, in order to partially cut into the tube wall.

The coupling member 5 is also shown as having slits 10 in the circumferential direction. During screwing together of the housing parts 1 and 2 these slits can be compressed; i.e. partly narrowed, in the axial direction of the coupling member 5, and thereby is achieved that the coupling member 5 is brought into a condition of axial strain.

The primary function of the clamping ring 6 is to keep a tube immobilized in the coupling. The primary function of the fingers 8, which are forced into engagement with the conical surface in the housing part 2, is to force the sealing ring 7 along the conical surface 4, but the fingers 8 may also contribute to keeping the tube immobilized in the coupling.

In Fig. 3 are shown nails 21 inserted through holes 22 in the clamping ring 6, which is integral with the coupling member 5. The nails 21 have heads in engagement with the conical surface 3, and the nails 21 have pointed ends, which by screwing together of the housing parts 1 and 2 will protrude slightly from the radially inner surface of the clamping ring 6, as shown, whereby the pointed ends can penetrate into the wall of a tube inserted in the coupling.

## Claims

1. A coupling comprising a coupling housing, consisting of a first and a second housing part (1, 2) which can be screwed together axially, each of which having an internal conical surface (3; 4) with, in the position of use, opposite conicity in the two conical surfaces, and a coupling member (5) situated in the housing is adapted, by the screwing together, to be influenced by a conical clamping ring (6) by cooperation with the conical surface (3) in the first housing part (1), for clamping of a tube inserted in the coupling housing, in such a manner that by the screwing together the coupling member (5) influences a resilient ring (7) which causes sealing between the tube and the second housing part (2), **characterized in that** one end of the coupling member (5) has axial, flexible fingers (8) separated by splits (9), whereby the free ends of the fingers (8) may be forced along the conical surface (4) in the second housing part (2) and force the resilient ring (7) along this conical surface and compress it against the tube.

2. A coupling according to claim 1, wherein the conical clamping ring (6) is integral with the coupling member (5).

3. A coupling according to claim 1 or 2, wherein the coupling member (5) comprises axial, flexible fingers (19) separated by splits (18) in the region of the clamping ring (6).

4. A coupling according to claim 3, wherein the fingers (19), which are in the region of the clamping ring (6), have ribs (20) in the circumferential direction on their radially inner side.

5. A coupling according to claim 1 or 2, wherein the coupling member (5) comprises at least two rows of slits (10) in the circumferential direction, each slit extending only in a part of the circumference and the slits in adjacent rows being mutually displaced in the circumferential direction.

6. A coupling according to claim 1 or 2, wherein at least one of the housing parts (1, 2) has external threads (11) near that end which in the position of use is directed axially outwardly.

## Patentansprüche

1. Kupplung, die folgendes ausweist:
ein Kupplungsgehäuse, das aus einem ersten und einem zweiten Gehäuseteil (1, 2) besteht, die axial zusammengeschraubt werden können und von denen jedes eine innere konische Oberfläche (3, 4) mit, in der Gebrauchsstellung, entgegengesetzter Konizität in den beiden konischen Oberflächen besitzt, und
ein Kupplungsteil (5), das sich in dem Gehäuse befindet und dazu ausgelegt ist, durch das Zusammenschrauben von einem konischen Klemmring (6) in Kooperation mit der konischen Oberfläche (3) in dem ersten Gehäuseteil (1) beeinflusst zu werden, um ein in das Kupplungsgehäuse eingesetztes Rohr festzuklemmen, und zwar in der Weise, daß durch das Zusammenschrauben das Kupplungsteil (5) einen elastischen Ring (7) beeinflusst, der eine Abdichtung zwischen dem Rohr und dem zweiten Gehäuseteil (2) bewirkt,
**dadurch gekennzeichnet,**
**daß** das eine Ende der Kupplungsteiles (5) axiale flexible Finger (8) besitzt, die durch Schlitze (9) voneinander getrennt sind, so daß die freien Enden der Finger (8) zwangsweise längs der konischen Oberfläche (4) in dem zweiten Gehäuseteile (2) bewegt werden können und den elastischen Ring (7) zwangsweise längs dieser konischen Oberfläche bewegen und ihn gegen das Rohr anpressen.

2. Kupplung nach Anspruch 1,
wobei der konische Klemmring (6) integral mit dem Kupplungsteil (5) ausgebildet ist.

3. Kupplung nach Anspruch 1 oder 2,
wobei das Kupplungsteil (5) axiale flexible Finger (19) aufweist, die durch Schlitze (18) in dem Bereich des Klemmringes (6) voneinander getrennt sind.

4. Kupplung nach Anspruch 3,
wobei die Finger (19), die sich in dem Bereich des Klemmringes (6) befinden, Rippen (20) in der Umfangsrichtung auf der radial innen gelegenen Seite besitzen.

5. Kupplung nach Anspruch 1 oder 2,
wobei das Kupplungsteil (5) mindestens zwei Reihen von Schlitzen (10) in der Umfangsrichtung ausweist, wobei jeder Schlitz sich nur in einem Teil des Umfanges erstreckt und die Schlitze in benachbarten Reihen in der Umfangsrichtung gegeneinander versetzt sind.

6. Kupplung nach Anspruch 1 oder 2,
wobei zumindest das eine der Gehäuseteile (1,2) ein Außengewinde (11) in der Nähe des Endes besitzt, welches in der Gebrauchsstellung axial nach außen gerichtet ist.

## Revendications

1. Couplage comprenant un logement de couplage, consistant en une première et une seconde parties de logement (1, 2) qui peuvent être vissées ensemble axialement, chacune ayant une surface conique intérieure (3; 4) avec, dans la position d'utilisation, une conicité opposée dans les deux surfaces coniques, et un élément de couplage (5) situé dans le logement est adapté, par le vissage des deux parties, pour être influencé par une bague de serrage conique (6) par coopération avec la surface conique (3) dans la première partie de logement (1), pour serrer un tube inséré dans le logement de couplage, de telle manière que par le vissage des deux parties l'élément de couplage (5) influence une bague élastique (7) qui crée une étanchéité entre le tube et la seconde partie de logement (2), **caractérisé en ce qu'**une extrémité de l'élément de couplage (5) a des doigts flexibles (8) axiaux séparés par des fentes (9), moyennant quoi les extrémités libres des doigts (8) peuvent être forcés le long de la surface conique (4) dans la seconde partie de logement (2) et forcent la bague élastique (7) le long de cette surface conique et la compriment contre le tube.

2. Couplage selon la revendication 1, dans lequel la bague de serrage conique (6) est d'un seul bloc avec l'élément de couplage (5).

3. Couplage selon la revendication 1 ou 2, dans lequel l'élément de couplage (5) comprend des doigts flexibles (19) axiaux séparés par des fentes (18) dans la région de la bague de serrage (6).

4. Couplage selon la revendication 3, dans lequel les doigts (19) qui sont dans la région de la bague de serrage (6), ont des nervures (20) dans la direction circonférentielle sur leur côté radialement intérieur.

5. Couplage selon la revendication 1 ou 2, dans lequel l'élément de couplage (5) comprend au moins deux rangées de fentes (10) dans la direction circonférentielle, chaque fente s'étendant seulement dans une partie de la circonférence et les fentes dans des rangées adjacentes étant mutuellement déplacées dans la direction circonférentielle.

6. Couplage selon la revendication 1 ou 2, dans lequel au moins l'une des parties de logement (1, 2) a des filets extérieurs (11) près de cette extrémité qui dans la position d'utilisation est dirigée axialement vers l'extérieur.
